# EUROPEAN PATENT APPLICATION

(11) **EP 3 940 855 A1**
(43) Date of publication of application: **19.01.2022**
(21) Application number: 20864327.0
(22) Date of filing: 20.05.2020
(51) Int. Cl.: H01M 10/0587

(54) **ELECTRODE ASSEMBLY AND BATTERY**

(71) Applicant: Ningde Amperex Technology Ltd., Ningde City, Fujian 352100 (CN)
(72) Inventor: WANG, Pan, Ningde Fujian 350900 (CN); LIU, Huijun, Ningde Fujian 350900 (CN); ZHANG, Yuanbing, Ningde Fujian 350900 (CN); SHI, Changchuan, Ningde Fujian 350900 (CN)
(74) Representative: Icosa
(86) International application number: PCT/CN2020/091386
(87) International publication number: WO 2021/232314

(57) **Abstract**

An electrode assembly formed by winding a first electrode plate, a separator and a second electrode plate. A winding terminating end of the first electrode plate is positioned on an outer side of a winding terminating end of the second electrode plate facing away from a winding core. A first active material layer on the winding terminating end of the first electrode plate covers one surface of the first current collector facing toward the second electrode plate. The other surface of the first current collector on the winding terminating end of the first electrode plate facing away from the second electrode plate is not coated with the first active material layer. The electrode assembly does not have a plain aluminum foil at the outermost ring, which enhances the energy density of lithium-ion batteries and improves drop safety. The application further provides a battery having the same.

## Description

### TECHNICAL FIELD

The application relates to the field of batteries, in particular to an electrode assembly and a battery having the same.

### BACKGROUND

Generally, when wound batteries come to the end of manufacturing, part of plain aluminum foil (without an active material coating on both surfaces) exists in the a tail of an outer electrode plate of a battery core, and the tail plain aluminum foil and a coating edge at the tail are usually attached with one layer of insulating tape for preventing the risk of a short circuit resulting from lithium dendrites at the coating edge of the electrode plate. The tail plain aluminum foil and the coating edge at the tail occupy a certain space of the battery core, lowering the energy density of the battery core. In addition, the battery core is usually packaged in a sealing way with an aluminum-plastic film, and a clearance exists between the battery core and a housing which packages the battery core in a sealing way. When the battery core suffers from impacts from drop off, the battery core itself and the tail plain aluminum foil easily break, and broken chips packaged and bound by the housing contact the broken electrode plate of the battery core to cause a short-circuit heating and even fire explosion.

### SUMMARY

In view of the foregoing situation, it is necessary to provide an electrode assembly without a plain aluminum foil in the outer side of the battery core, and which can increase the energy density, and a battery having the same.

An embodiment of the application provides an electrode assembly, which comprises a first electrode plate, a second electrode plate and an separator, the polarity of the second electrode plate is opposite to the polarity of the first electrode plate, the separator is arranged between the first electrode plate and the second electrode plate, and the electrode assembly is formed by winding the first electrode plate, the separator and the second electrode plate. The first electrode plate comprises a first current collector and a first active material layer. The first active material layer is arranged on a surface of the first current collector. A winding terminating end of the first electrode plate is positioned on a side of a winding terminating end of the second electrode plate facing away from the winding core. The first active material layer on the winding terminating end of the first electrode plate covers one surface of the first current collector facing toward the second electrode plate. The electrode assembly further comprises an adhesive member with a thickness of 15 µm - 25 µm. The adhesive member is connected to the winding terminating end of the first electrode plate and covers part of the outer side of the electrode assembly.

In an optional embodiment, the other surface of the first current collector on the winding terminating end of the first electrode plate facing away from the second electrode plate is not coated with the first active material layer.

In an optional embodiment, the adhesive member is hot melt adhesive, which are adhered to the outer surface of the electrode assembly.

Further, the hot melting temperature of the adhesive member is smaller than or equal to 120° C, and the hot melting pressure is smaller than or equal to 3 MPa.

In an optional embodiment, the winding terminating end of the second electrode plate extends out of the winding terminating end of the first electrode plate along a winding direction, and the extension length L1 is greater than or equal to 2 mm.

Further, the winding terminating end of the separator extends out of the winding terminating end of the second electrode plate along the winding direction, and is attached to an inner surface of the adhesive member.

In an optional embodiment, the electrode assembly further comprises a first tab and a second tab, wherein the first tab is connected to the first electrode plate; the second tab is connected to the second electrode plate; and along the thickness direction of the electrode assembly, the projections of the first tab and the second tab are not overlapped.

Further, a winding starting end of the first electrode plate is provided with a first plain foil area; a winding starting end of the second electrode plate is provided with a second plain foil area; the first tab is arranged in the first plain foil area; and the second tab is arranged in the second plain foil area.

Further, the electrode assembly further comprises a first insulating member, and the first insulating member is arranged in the first plain foil area and covers the first tab.

In an optional embodiment, the second plain foil area extends out of the first plain foil area; the electrode assembly further comprises a second insulating member; and the second insulating member covers an end portion of the first plain foil area.

An embodiment of the application further provides a battery, which comprises an electrode assembly and a package, wherein the electrode assembly is any one of the foregoing electrode assemblies, the electrode assembly is accommodated in the package, and the tabs of the electrode assembly extend out of the package.

The design that the electrode assembly does not have the plain aluminum foil at the outermost ring increases the energy density of lithium-ion batteries, also improves safety used in case of drop, etc. and reduces the aluminum foil consumables of a single electrode assembly.

### BRIEF DESCRIPTION OF DRAWINGS

FIG. 1 is a winding structural diagram of an electrode assembly in an embodiment.
FIG. 2 is a winding structural diagram of an electrode assembly in an embodiment.
FIG. 3 is a structural diagram of an electrode assembly in an embodiment.
FIG. 4 is an unfolded structural diagram of a first electrode plate in a comparative embodiment.
FIG. 5 is an unfolded structural diagram of a first electrode plate in an embodiment.
FIG. 6 is an unfolded structural diagram of a first electrode plate in a comparative embodiment.
FIG. 7 is an unfolded structural diagram of a first electrode plate in an embodiment.
FIG. 8 is a winding structural diagram of an electrode assembly in a comparative embodiment.
FIG. 9 is a structural diagram of a battery in an embodiment.

**Reference numerals of main elements:**

| | |
|---|---|
| Electrode assembly | 100 |
| First plane | 101 |
| Second plane | 102 |
| First arc surface | 103 |
| Second arc surface | 104 |
| Plain aluminum foil | 105 |
| Insulating tape | 106 |
| First electrode plate | 10 |
| First current collector | 11 |
| First active material layer | 12 |
| Winding terminating end | 13 |
| First plain foil area | 14 |
| Second electrode plate | 20 |
| Second current collector | 21 |
| Second active material layer | 22 |
| Second plain foil area | 23 |
| Separator | 30 |
| Winding terminating end | 31 |
| Adhesive member | 40 |
| First tab | 50 |
| Second tab | 60 |
| First insulating member | 70 |
| Second insulating member | 80 |
| Battery | 200 |
| Package | 201 |

### DETAILED DESCRIPTION OF EMBODIMENTS

The following clearly and fully describes the technical solutions in the embodiments of the application by reference to the accompanying drawings in the embodiments of the application. Apparently, the described embodiments are merely a part of but not all of the embodiments of the application. Based on the embodiments in the application, all other embodiments made by an ordinarily skilled in the art without creative labor fall within the protective scope of the application.

It needs to be noted that when an element is described to be "fixed to" another element, it can be directly on another element or an intermediate element can exist. When an element is deemed to be "connected to" another element, it can be directly connected to another element or it is possible that an intermediate element exists at the same time. When an element is deemed to be "arranged on" another element, it can be directly arranged on another element or it is possible that an intermediate element exists at the same time. Terms, "perpendicular", "horizontal", "left", "right" and similar expressions, used herein are for the purpose of illustration only.

Unless otherwise specified, all scientific and technological terms used herein have meanings the same as those generally understood by a skilled in the art of the application. The terms used in the specification of the application herein are merely intended for describing specific embodiments but are not intended to limit this application. The term "or / and" used herein comprises one or any one of and all of combinations of a plurality of relevant listed items.

An embodiment of the application provides an electrode assembly, which comprises a first electrode plate, a second electrode plate and an separator, wherein the polarity of the second electrode plate is opposite to the polarity of the first electrode plate, the separator is arranged between the first electrode plate and the second electrode plate, and the electrode assembly is formed by winding the first electrode plate, the separator and the second electrode plate. The first electrode plate comprises a first current collector and a first active material layer. The first active material layer is arranged on a surface of the first current collector. A winding terminating end of the first electrode plate is positioned on a side of a winding terminating end of the second electrode plate facing away from the winding core. The first active material layer on the winding terminating end of the first electrode plate covers one surface of the first current collector facing toward the second electrode plate. The electrode assembly further comprises a adhesive member with a thickness of 15 µm - 25 µm. The adhesive member is connected to the winding terminating end of the first electrode plate and covers part of an outer surface of the electrode assembly.

The design that the electrode assembly does not have the plain aluminum foil at the outermost ring and the combined use of the super-thin adhesive member with a thickness of 15 µm - 25 µm increase the energy density of lithium-ion batteries, also improve the safety used in case of drop, etc., and reduce the aluminum foil consumables of a single electrode assembly.

The following describes some embodiments of the application in detail. To the extent that no conflict occurs, the following embodiments/implementations and the features in the embodiments/implementations may be combined with each other.

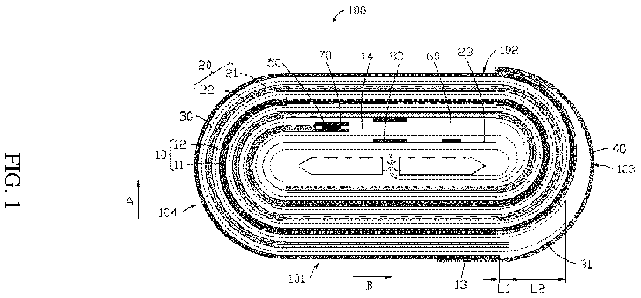

Referring to FIG. 1, in an embodiment of the application, an electrode assembly 100 comprises a first electrode plate 10, a second electrode plate 20 and an separator 30. The first electrode plate 10 and the second electrode plate 20 are opposite in polarity. The separator 30 is arranged between the first electrode plate 10 and the second electrode plate 20. The electrode assembly 100 is formed by winding the first electrode plate 10, the separator 30 and the second electrode plate 20 around a winding needle, and after the winding process is finished, the winding needle is taken out of the electrode assembly 100. The electrode assembly 100 comprises winding terminating ends, and the winding terminating ends include a winding terminating end 13 of the first electrode plate 10, a winding terminating end of the second electrode plate 20 and a winding terminating end of the separator 30. The winding terminating end 31 of the separator 30 is positioned between the winding terminating end 13 of the first electrode plate 10 and the winding terminating end of the second electrode plate 20. The winding terminating end 13 of the first electrode plate 10 is positioned on the outermost layer of the electrode assembly 100.

The first electrode plate 10 comprises a first current collector 11 and a first active material layer 12. The first active material layer 12 is arranged on a surface of the first current collector 11. The winding terminating end of the first electrode plate 10 is positioned on an side of the winding terminating end of the second electrode plate 20 facing away from a winding core.

In an embodiment of the application, the first electrode plate 10 is a cathode electrode plate; the first current collector 11 may be an aluminum foil layer; and the first active material layer 12 is a cathode active material layer which may be selected from electrochemical active materials that enable reversible intercalation and deintercalation of lithium ions, such as LiCoO₂ and LiFePO₄. The second electrode plate 20 is an anode electrode plate, which comprises a second current collector 21 and a second active material layer 22. The second current collector may be a copper foil layer. The second active material layer 22 may be selected from electrochemical active materials that enable intercalation of lithium ions such as graphite, soft carbon, hard carbon and Li₄Ti₅O₁₂.

The winding terminating end 13 of the first electrode plate 10 is a structure of the outermost electrode plate of the electrode assembly 100. The first active material layer 12 on the winding terminating end 13 of the first electrode plate 10 covers one surface of the first current collector 11 facing toward the second electrode plate 20. The other surface of the first current collector 11 on the winding terminating end 13 of the first electrode plate 10 facing away from the second electrode plate 20 is not coated with the first active material layer 12. The electrode assembly 100 further comprises an adhesive member 40 with a thickness of 15 µm - 25 µm. The adhesive member 40 is connected to the winding terminating end of the first electrode plate 10 and covers part of the outer surface of the electrode assembly 100.

In an embodiment of the application, the adhesive member 40 is hot melt adhesive, optionally super-thin hot melt adhesive with a thickness of 15 µm - 25 µm, which may be a rubber binder used in combination with PET. Under certain pressure ( ≤ 3 MPa) and temperature ( ≤ 120° C) conditions, the adhesive member 40 can become viscous. In another word, the hot melting temperature of the adhesive member 40 is smaller than or equal to 120° C, and the hot melting pressure is smaller than or equal to 3 MPa.

Referring to FIG. 1 again, the outer surface of the electrode assembly 100 include a first plane 101, a second plane 102, a first arc surface 103 and a second arc surface 104. Along the thickness direction (a direction pointed at by arrow A in FIG. 1) of the electrode assembly 100, the first plane 101 and the second plane 102 are arranged opposite to each other. Along the width direction (a direction pointed at by arrow B in FIG. 1) of the electrode assembly 100, the first arc surface 103 and the second arc surface 104 are arranged opposite to each other, and the first arc surface 103 and the second arc surface 104 are connected between the first plane 101 and the second plane 102, respectively.

The winding terminating end 13 of the first electrode plate 10 is approximately positioned at the boundary between the first plane 101 and the first arc surface 103. The adhesive member 40 is connected to the winding terminating end of the first electrode plate 10 and attached to the first arc surface 103, preventing the adhesive member 40 from increasing the thickness of the electrode assembly 100. In other embodiments, the winding terminating end of the first electrode plate can further be positioned in the first plane 101 or the second plane 102, and correspondingly, the adhesive member 40 can further be attached to the first plane 101 or the second plane 102.

Further, to prevent burrs generated by lithium separation at an end portion of the second electrode plate 20 from resulting in a short circuit when the burrs penetrate through the separator 30 and connect the first electrode plate 10, the winding terminating end of the second electrode plate 20 extends out of the winding terminating end 13 of the first electrode plate 10 along the winding direction of the electrode plate. The extension length L1 is greater than or equal to 2 mm. The winding terminating end 31 of the separator 30 extends out of the winding terminating end of the second electrode plate 20 and is attached to the inner surface of the adhesive member 40. The length L2 by which the winding terminating end 31 of the separator 30 extends out of the second electrode plate 20 is greater than or equal to 4 mm. The winding terminating end of the second electrode plate 20 is covered by the winding terminating end 31 of the separator so as to protect and insulate the winding terminating end of the second electrode plate 20.

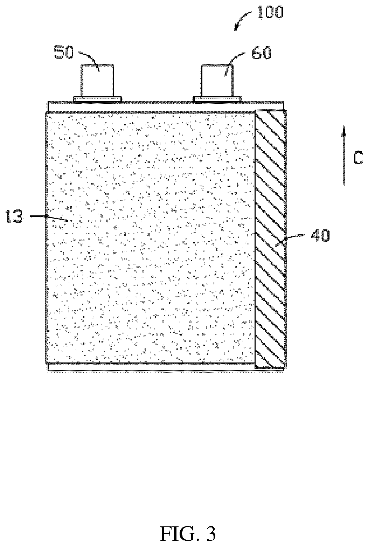

Referring to FIG. 1 and FIG. 3, the electrode assembly 100 further comprises a first tab 50 and a second tab 60, wherein the first tab 50 is connected to the first electrode plate 10, and the second tab 60 is connected to the second electrode plate 20. Along the thickness direction of the electrode assembly 100, the projections of the first tab 50 and the second tab 60 are not overlapped. Along the length direction (a direction pointed at by arrow C in FIG. 3) of the electrode assembly 100, the first tab 50 and the second tab 60 extend out of the same end of the electrode assembly 100. In other embodiments, the first tab 50 and the second tab 60 can extend out of different ends of the electrode assembly 100. The application is not limited to such way.

Further, a winding starting end of the first electrode plate 10 is provided with a first plain foil area 14; a winding starting end of the second electrode plate 20 is provided with a second plain foil area 23; the first tab 50 is arranged in the first plain foil area 14; and the second tab 60 is arranged in the second plain foil area 23. The electrode assembly 100 comprises a first insulating member 70. The first insulating member 70 is arranged in the first plain foil area 14 and covers the first tab 50, preventing the burrs on the first tab 50 from resulting in a short circuit when the burrs penetrate through the separator 30 and contact the second electrode plate 20. In an optional embodiment, the first insulating member 70 can be an insulating tape, which extends from the first tab 50 to a starting end of the first active material layer 12 and almost covers the entire first plain foil area 14, such that the first plain foil area 14 is well protected against incidents such as breakage and the short circuit.

In an optional embodiment, the second plain foil area 23 extends out of the first plain foil area 14, and the second tab 60 is arranged in an area of the second plain foil area 23, wherein the area extends out of the first plain foil area 14. Even if the burrs on the second tab 60 penetrate through the separator 30, the second tab 60 contacts the second electrode plate 20 instead of contacting the first electrode plate 10 so as to avoid the short circuit. The electrode assembly 100 further comprises a second insulating member 80. The second insulating member 80 covers an end portion of the first plain foil area 14, preventing the burrs at the end portion of the first plain foil area 14 from penetrating through the separator 30 and contacting the second electrode plate 20.

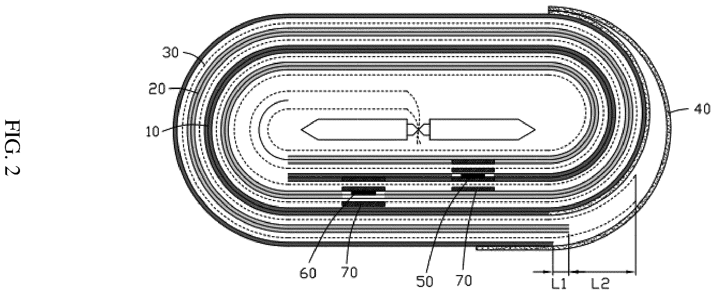

Referring to FIG. 2, in one of the embodiments of the application, the first tab 50 is arranged in an area coated with the first active material layer 12 on the first current collector 11, and the second tab 60 is arranged in an area coated with the second active material layer 22 on the second current collector 21. The first insulating member 70 is arranged at both the first tab 50 and the second tab 60 to avoid the short-circuiting problem. To connect the first tab 50 to the first current collector 11, it needs to remove part of the first active material layer 12 first, such that part of the first current collector 11 is exposed out of the first active material layer 12, and then the first tab 50 needs to be welded on the exposed part of the first current collector 11. The second tab 60 is connected to the second current collector 21 by the similar way, which is not described repeatedly here.

In other embodiments, the first tab 50 and the second tab 60 can further be separately arranged in either the plain foil area at the winding core of the electrode assembly 100 or other positions of the electrode plate. The application is not limited to such way.

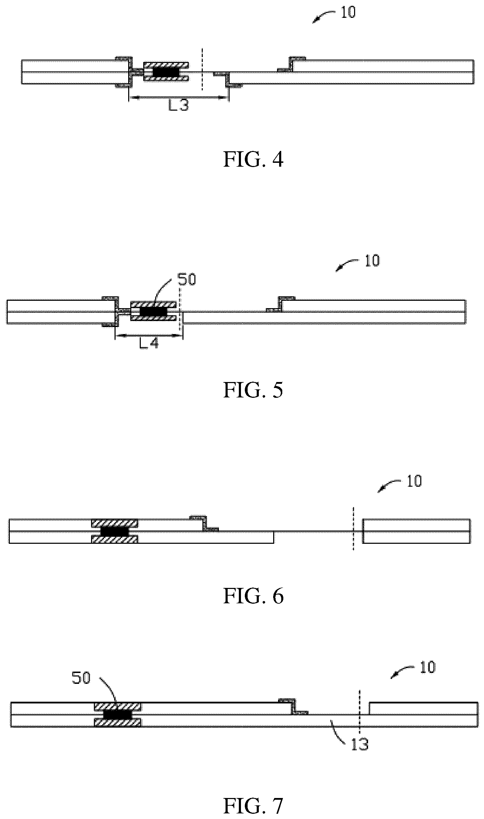

Referring to FIG. 4 and FIG. 5, the position shown by the dotted line in the figures is the cut position of two adjacent first electrode plates 10 during manufacturing. When the first tab 50 is arranged in the first plain foil area 14, since the electrode assembly in the comparative embodiment is provided with a section of plain aluminum foil at the outermost ring, and in the comparative embodiment as shown in FIG. 4 the length L3 of the plain aluminum foil area is apparently greater than the length L4 of the plain aluminum foil area in the embodiment of the application as shown in FIG. 5, the length L4 of the plain aluminum foil area in the embodiment of the application only needs to meet the parameter requirement of the winding starting end of the electrode assembly 100, which saves the aluminum foil consumables, removes the plain aluminum foil at the outermost ring, enhances the energy density and improves the safety of the electrode assembly 100 used in occasions such as drop.

Referring to FIG. 6 and FIG. 7, when the first tab 50 is arranged in the area coated with the first active material layer 12 on the first current collector 11, the electrode assembly in the comparative embodiment is provided with a section of plain aluminum foil at the outermost ring, in the comparative embodiment as shown in FIG. 6, a section of single-coated area and a section of plain aluminum foil exist between two adjacent first electrode plates 10 and the single-coated area is the winding terminating end 13 of the first electrode plate 10, while in the embodiment of the application as shown in FIG. 7, the plain aluminum foil between two adjacent first electrode plates 10 is removed and there is only a section of single-coated area (the winding terminating end 13 of the first electrode plate 10), such that the first active material layer 12 on the lower surface of the first current collector 11 can be continuous, thereby simplifying the manufacturing process of the first electrode plate 10 and improving the production efficiency.

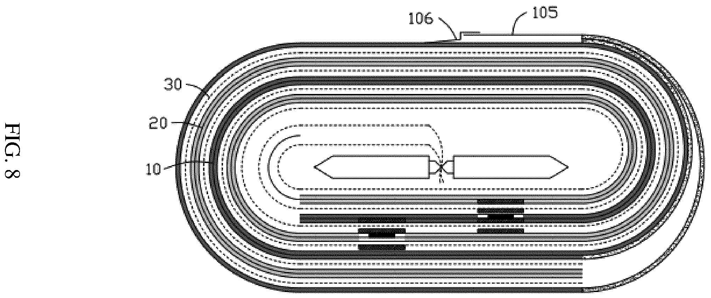

Referring to FIG. 8, in a comparative embodiment, part of plain aluminum foil 105 (without the active material coating on both sides) exists in the outer tail of the electrode assembly, and the tail plain aluminum foil and the coating edge at the tail are attached with one layer of insulating tape 106. The plain aluminum foil 105 and the insulating tape 106 are both positioned in the second plane 102 of the electrode assembly.

In conjunction with the above-mentioned embodiments of the application and by reference to the above-mentioned comparative embodiments, the increase ratios of the energy densities of electrode assemblies 100 obtained using corresponding embodiments were measured, which can be seen in the table below.

When the thickness of the aluminum foil is 10 µm:

| Group of the electrode assembly thickness | Thickness in the comparative embodiment µm | Thickness in the embodiment µm | Increase ratio of the energy density |
|---|---|---|---|
| 1 | 3000 | 2990 | 0.33% |
| 2 | 3500 | 3490 | 0.29% |
| 3 | 4000 | 3990 | 0.25% |
| 4 | 4500 | 4490 | 0.22% |
| 5 | 5000 | 4990 | 0.20% |
| 6 | 5500 | 5490 | 0.18% |
| 7 | 6000 | 5990 | 0.17% |
| 8 | 6500 | 6490 | 0.15% |

When the thickness of the aluminum foil is 12 µm:

| Group of the electrode assembly thickness | Thickness in the comparative embodiment µm | Thickness in the embodiment µm | Increase ratio of the energy density |
|---|---|---|---|
| 1 | 3000 | 2988 | 0.40% |
| 2 | 3500 | 3488 | 0.34% |
| 3 | 4000 | 3988 | 0.30% |
| 4 | 4500 | 4488 | 0.27% |
| 5 | 5000 | 4988 | 0.24% |
| 6 | 5500 | 5488 | 0.22% |
| 7 | 6000 | 5988 | 0.20% |
| 8 | 6500 | 6488 | 0.18% |

The drop test data of the electrode assembly in the comparative embodiment and in the embodiment of the application can be seen in the table below.

Basic parameters of the electrode assembly in the embodiment and the comparative embodiment in the first test group are as follows:

Capacity of the battery core: 3200mAh; chemical system: 4.35V; S\A overhang: 2.0mm. S: Separator; A: Anode; overhang: 2.0 mm which indicates that the width of the separator is 2 mm greater than that of the anode electrode plate. The anode electrode plate is the first electrode plate.

Test data of the first group:

| Group | Pass number of drop | | | Pass ratio |
|---|---|---|---|---|
| Embodiment | 4/10 pass | | | 40% |
| Comparative embodiment | 0/10 pass | | | 0% |
| Group | unbroken package | Overturned separator | Smoking/fire | Pass ratio |
| Embodiment | 0/20 | 0/20 | 0/20 | 100% |
| Comparative embodiment | 1/20 | 2/20 | 0/20 | 85% |

Basic parameters of the electrode assemblies in the embodiment and the comparative embodiment in the second test group are as follows:

Capacity of the battery core: 4000mAh; chemical system: 4.35V; S\A overhang: 2.0mm.

Test data of the second group:

| Group | Unbroken package | Overturned separator | Smoking/fire | Pass ratio |
|---|---|---|---|---|
| Embodiment | 0/20 | 1/20 | 0/20 | 95% |
| Comparative embodiment | 1/20 | 3/20 | 0/20 | 80% |

In conjunction with FIGS. 4-8 and data in the table above, in the embodiment of the application, comparing with the comparative embodiment, the design that the electrode assembly 100 is not provided with the plain aluminum foil at the outermost ring, and that the adhesive member 40 connects the winding terminating end of the first electrode plate 10 and part of the outer surface of the electrode assembly 100, reduces the thickness of the electrode assembly 100 and enhances the energy density and drop safety at the same time.

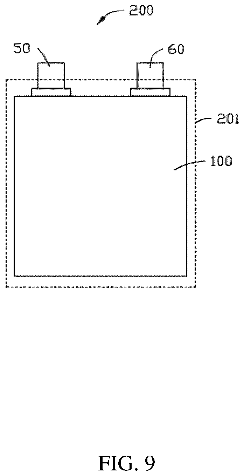

Referring to FIG. 9, an embodiment of the application further provides a battery 200, which comprises a package 201 and the electrode assembly 100 in the foregoing embodiments, wherein the electrode assembly 100 is accommodated in the package 201, and the tabs of the electrode assembly 100 extend out of the package 201.

The foregoing embodiments are merely used to describe the technical solution of the application, and not to limit the application. Despite of detailed description of the application by reference to the foregoing preferable embodiments, an ordinarily skilled in the art should understand that, various modifications and equivalent substitutions may be made to the technical solutions of the application, and all such modifications and equivalent substitutions fall within the technical conception and scope of the technical solution of the application.

## Claims

1. An electrode assembly, comprising:
a first electrode plate;
a second electrode plate, with a polarity opposite to the polarity of the first electrode plate;
a separator arranged between the first electrode plate and the second electrode plate, the electrode assembly being formed by winding the first electrode plate, the separator and the second electrode plate;
**characterized in that**, the first electrode plate comprises a first current collector and a first active material layer, the first active material layer is arranged on a surface of the first current collector, and a winding terminating end of the first electrode plate is positioned on an outer side of a winding terminating end of the second electrode plate facing away from a winding core;
the first active material layer on the winding terminating end of the first electrode plate covers one surface of the first current collector facing toward the second electrode plate; and the electrode assembly further comprises a adhesive member with a thickness of 15 µm - 25 µm, the adhesive member being connected to the winding terminating end of the first electrode plate and covering part of the outer surface of the electrode assembly to fix the winding terminating end of the first electrode plate.

2. The electrode assembly according to claim 1, **characterized in that**, the adhesive member is hot melt adhesive, and is adhered to the winding terminating end of the first electrode plate and the outer surface of the electrode assembly.

3. The electrode assembly according to claim 2, **characterized in that**, the hot melting temperature of the adhesive member is less than or equal to 120° C, and the hot melting pressure is less than or equal to 3 MPa.

4. The electrode assembly according to claim 1, **characterized in that**, the winding terminating end of the second electrode plate extends out of the winding terminating end of the first electrode plate along a winding direction, and the extension length is greater than or equal to 2mm.

5. The electrode assembly according to claim 4, **characterized in that**, a winding terminating end of the separator extends out of the winding terminating end of the second electrode plate along the winding direction, and is attached to the inner surface of the adhesive member.

6. The electrode assembly according to claim 1, **characterized in that**, the electrode assembly further comprises a first tab and a second tab, the first tab is connected to the first electrode plate, and the second tab is connected to the second electrode plate.

7. The electrode assembly according to claim 6, **characterized in that**, a winding starting end of the first electrode plate is provided with a first plain foil area, a winding starting end of the second electrode plate is provided with a second plain foil area, the first tab is arranged in the first plain foil area, and the second tab is arranged in the second plain foil area.

8. The electrode assembly according to claim 7, **characterized in that**, the electrode assembly comprises a first insulating member, the first insulating member being arranged in the first plain foil area and covering the first tab.

9. The electrode assembly according to claim 7, **characterized in that**, the second plain foil area extends out of the first plain foil area, the electrode assembly further comprises a second insulating member, and the second insulating member covers an end portion of the first plain foil area.

10. A battery, **characterized in that**, the battery comprises an electrode assembly according to any one of claims 1 to 9 and a package, the electrode assembly is accommodated in the package, and the tabs of the electrode assembly extend out of the package.
